# EUROPÄISCHE PATENTSCHRIFT

(11) **EP 1 507 819 B1**
(45) Veröffentlichungstag und Bekanntmachung des Hinweises auf die Patenterteilung: **12.12.2007**
(21) Anmeldenummer: 03732435.7
(22) Anmeldetag: 21.05.2003
(51) Int. Cl.: C08J 3/12, C04B 24/26

(54) **VERWENDUNG VON WASSERLÖSLICHEN POLYMEREN ALS TROCKNUNGSHILFMITTEL FÜR DIE HERSTELLUNG POLYMERER DISPERGIERMITTEL**
USE OF WATER-SOLUBLE POLYMERS AS AUXILIARY DRYING AGENTS FOR THE PRODUCTION OF POLYMER DISPERSING AGENTS
UTILISATION DE POLYMERES HYDROSOLUBLES EN TANT QU'AGENTS DESSECHANTS AUXILIAIRES POUR LA PRODUCTION DE DISPERSANTS POLYMERES

(30) Priorität: 22.05.2002 DE 10222530; 24.12.2002 DE 10260989
(43) Veröffentlichungstag der Anmeldung: 23.02.2005
(73) Patentinhaber: BASF Construction Polymers GmbH, 83308 Trostberg (DE)
(72) Erfinder: HOMMER, Herbert, 84453 Mühldorf (DE); BICHLER, Manfred, 84549 Engelsberg (DE); STRAUSS, Werner, 83308 Trostberg (DE); WUTZ, Konrad, 83308 Trostberg (DE)
(74) Vertreter: Dey, Michael
(86) Internationale Anmeldenummer: PCT/EP2003/005336
(87) Internationale Veröffentlichungsnummer: WO 2003/097721

(56) Entgegenhaltungen:
- EP-A- 0 467 103
- EP-A- 0 601 518
- EP-A- 0 629 650
- EP-A- 0 671 435
- EP-A- 0 861 867
- WO-A-98/28353
- DE-A- 2 238 903
- DE-A- 3 344 242
- DE-A- 4 406 822
- DE-A- 19 539 460
- JP-A- 6 239 652

## Beschreibung

Gegenstand der vorliegenden Erfindung ist die Verwendung von wasserlöslichen Polymeren definierter Zusammensetzung als Trocknungshilfsmittel für die Herstellung pulverförmiger, polymerer Dispergiermittel.

Wässrige Polymerisatdispersionen sind allgemein bekannt. Es handelt sich dabei um Systeme mit redispergierenden Eigenschaften, die im Wesentlichen kugelförmige Knäuel aus ineinander verschlungenen Polymerisatketten (sogenannte Polymerisatteilchen) in disperser Verteilung enthalten. Ebenso wie Polymerisatlösungen beim Verdampfen des Lösemittels weisen wässrige Polymerisatdispersionen beim Verdampfen des wässrigen Dispergiermediums das Potenzial zur Ausbildung von Polymerisatfilmen auf, weshalb sie insbesondere als Bindemittel, Klebstoffe und Beschichtungsmittel Anwendung finden.

Nachteilig bei der Applikation der wässrigen Polymerisatdispersionen ist, dass sie als Verkaufsform nicht voll befriedigen. So impliziert ihr Transport vom Herstellort zum Gebrauchsort neben dem Transport des modifizierten Polymerisats stets den Transport des eigentlich überall leicht verfügbaren Anmachwassers. Ferner können wässrige Polymerisatdispersionen mineralischen Bindemitteln zum Zweck deren Modifikation erst am Gebrauchsort zugesetzt werden, da diese ansonsten vor Gebrauch aushärten. Des Weiteren können bei den Polymerdisatpersionen, aufgrund ihrer komplexen Zusammensetzung, bei der Lagerung und beim Transport der gebrauchsfertigen Formulierung Probleme durch Phasentrennung, Nachdicken, Schädigung durch Frost- und Bakterieneinwirkung auftreten.

Eine wünschenswerte Form wässriger Polymerisatdispersionen stellt daher bei Zusatz von Wasser ein Polymerisatpulver dar, welches redispergierbar ist. Ein großer Vorteil von Redispersionspulvern gegenüber den flüssigen Dispersionen ist, dass man Trockenmörtelmischungen herstellen kann, die an der Baustelle nur noch mit Wasser angemischt werden müssen. Dies bringt viele Vorteile wie erhöhte Arbeitssicherheit, sichere Handhabung und einfachere Gebindeentleerung mit sich.

Dispergiermittel und insbesondere Zement-Dispergiermittel werden im Baubereich vielfach hydraulisch aushärtenden Baustoffen zugesetzt, um eine ausreichende Fließfähigkeit und Verarbeitbarkeit des Betons oder Mörtels zu erzielen, was insbesondere bei niedrigen sogenannten w/z-Werten wichtig ist. Je kleiner nämlich das Wasser-/Zement(w/z)-Verhältnis ist, um so stärker nehmen das mechanische Widerstandsvermögen und die Dauerhaftigkeit von ausgehärteten zementhaltigen Baustoffen wie Beton oder Mörtel zu. Konsistenz und Verarbeitbarkeit dieser Baustoffe nehmen allerdings mit sinkenden w/z-Verhältnissen ab.

Die seit langer Zeit eingesetzten Melamin-Formaldehyd-Sulfit- sowie Naphthalinsulfonsäure-Formaldehyd-Harze genügen heutzutage oft nicht mehr den Anforderungen, da unter anderem großer Wert auf eine lange Verarbeitbarkeit bei einer gleichzeitig schnellen Festigkeitsentwicklung und hohen mechanischen Widerstandsfähigkeit des Endproduktes gelegt wird. Ein zusätzliches Problem ergibt sich bei der Anwendung derartiger Fließmittel im Bergbau (als Spritzbetone) und im Innenbereich, wo es zur Freisetzung des in den Produkten herstellungsbedingt enthaltenen toxikologisch bedenklichen Formaldehyds und damit zu arbeitshygienischen Belastungen kommen kann.

Seit geraumer Zeit werden deshalb Zementdispergiermittel auf Basis Polycarboxylatether eingesetzt, welche die oben erwähnten Anforderungen weit besser zu erfüllen vermögen. Diese Polycarboxylatether werden mittels radikalischer Polymerisationsreaktionen vorzugsweise im wässrigen Medium hergestellt und fallen als wässrige Lösung an. Die Polymerisation kann aber auch in Gemischen von Wasser mit organischen Lösemitteln oder in einer Emulsion bzw. in Substanz erfolgen.

In Anwendungsbereichen in denen die Polymere als Additiv in werksseitig vorgefertigten Trockenmischungen benötigt werden, ist die Verwendung wässriger Zubereitungen auch in diesem Fall ungünstig, ja sogar vollkommen ausgeschlossen. Für solche Bereiche ist es deshalb zwingend erforderlich, sämtliche Additive und damit auch das Dispergiermittel in Pulverform bereitzustellen.

Eine besonders zweckmäßige Methode zur Überführung einer wässrigen Polymerisatdispersion in ein redispergierbares Polymerisatpulver oder ein pulverförmiges Dispergiermittel ist das Verfahren der Sprühtrocknung, bei dem die Polymerdispersion in einem Warmluftstrom versprüht und entwässert wird. Da die zur Modifikation von mineralischen Bindemitteln oder als Bindemittel für Kunststoffputze einzusetzenden Polymerisate in der Regel eine Glasübergangstemperatur unterhalb von 60 °C aufweisen, lässt sich ohne Mitverwendung von Sprühhilfsmittel das Verfahren der Sprühtrocknung zur Herstellung ihrer redispergierbaren Polymerisatpulver entweder gar nicht oder lediglich in einem unwirtschaftlichen Temperaturbereich anwenden. Ein weiterer Nachteil der ohne Sprühhilfsmittel durch Trocknung wässriger Polymerisatdispersionen erzeugten Polymerisatpulver ist ferner, dass ihre Redispergierbarkeit bei Zusatz von Wasser in der Regel insofern nicht voll befriedigt, als die bei der Redispergierung resultierende Polymerisat-Durchmesserverteilung sich in der Regel deutlich von derjenigen in der wässrigen Ausgangsdispersion (Primärteilchen-Durchmesserverteilung) unterscheidet.

Ebenfalls bekannt ist, dass bei der Erzeugung von pulverförmigen Dispergiermitteln, die eine hohe Wasserlöslichkeit aufweisen, im Zuge der konventionellen Trocknungsmethoden oft unlösliche Gele resultieren, welche wiederum eine schlechte Wirkung entfalten (JP 07-14829).

Ferner hat man sich mit dem Problem auseinanderzusetzen, dass nicht unerhebliche Mengen an Polymerpulver an der Wandung des Trockenturms festkleben, was die Produktausbeute drastisch reduziert.

Ein weiterer Nachteil des konventionellen Sprühtrocken-Verfahrens bei dieser Art von Polymeren besteht darin, dass vor der Trocknung oftmals nicht unerhebliche Mengen an anorganischen Zusätzen zugegeben werden müssen, aufgrund derer zwangsläufig der Wirkanteil im resultierenden Pulver abnimmt; oder aber das Polymer wird vom Trägermaterial absorbiert, was wiederum zu deutlichen Wirkungsverlusten in der Anwendung führt.

Ferner findet beim Zusatz von anorganischen Materialien mit einer relativ hohen Dichte in der Polymerlösung leicht eine Sedimentation des Trägermaterials statt. Geschieht dies während des Transports der Polymerlösung aus dem Vorratsbehälter zum Trockneraggregat, so resultieren starke Inhomogenitäten im Endprodukt.

Um diese Probleme zu lösen, hat man versucht, der Polymerlösung ein oder mehrere Reduktionsmittel zuzusetzen und dann mittels Kneten und Mischen zu trocknen (EP 1 052 232 A1). Dieses Verfahren ist jedoch sehr aufwendig, da die aufkonzentrierte Polymerlösung meist unter Vakuum und Inertgas getrocknet werden muss. Darüber hinaus wird bei der Pulverisierung von hochviskosen Lösungen der Motor der Trocknungsaggregate oft bis über dessen Leistungsgrenze hinaus beansprucht, was zur automatischen Abschaltung und somit zu wirtschaftlich ungünstigen Stillstandzeiten führt. Außerdem ist bei solchen Verfahren kein sicherer Arbeitsablauf mehr gegeben. Schließlich muss bei diesen Verfahren das feste Polymer oftmals noch zerkleinert und/oder gemahlen werden, was einen zusätzlichen Arbeitsschritt notwendig macht und weitere Kosten verursacht.

Seit längerem sind nun Verbindungen bekannt, deren Zusatz zu wässrigen Polymerisatdispersionen das Erscheinungsbild der bereits als unerwünscht genannten, irreversiblen Sekundärteilchenbildung beim Trocknen reduziert. Diese Verbindungen werden unter dem Oberbegriff Trocknungshilfsmittel zusammengefasst. Sie sind vielfach insbesondere auch als Sprühhilfsmittel bekannt, da die ebenfalls bereits erwähnte Sprühtrocknung in besonderem Ausmaß die Ausbildung irreversibler Sekundärteilchen fördert. Die Sprühhilfsmittel verhindern ganz allgemein ein Verbacken bzw. Verklumpen während des Trocknungsprozesses und mindern in der Regel gleichzeitig die Ausbildung eines an der Trocknerwand haftenden Polymerbelags bei der Sprühtrocknung und sie bewirken so eine Erhöhung der Pulverausbeute.

So werden z.B. in der DE-OS 20 49 114 und DE-PS 44 34 010 Kondensationsprodukte aus Melaminsulfonsäure und Formaldehyd als Trocknungsmittel für wässrigen Polymerisatdispersionen empfohlen, während DE-OS 24 45 813 und EP-A 78 449 Kondensationsprodukte aus Naphthalinsulfonsäure und Formaldehyd offenbaren.

EP-A 407 889 empfiehlt Kondensationsprodukte aus Phenolsulfonsäure und Formaldehyd als Trocknungsmittel für wässrige Polymerisatdispersionen.

Die DE-OS 24 45 813 empfiehlt sulfongruppenhaltige Kondensationsprodukte aus ein- oder mehrkernigen aromatischen Kohlenwasserstoffen und Formaldehyd als Trocknungshilfsmittel, während DE-OS 41 18 007 Kondensationsprodukte aus sulfonierten Phenolen, Harnstoff, weiteren organischen Stickstoffbasen und Formaldehyd als Trocknungsmittel beschreibt.

In der DE-OS 33 44 242 sind als Trocknungshilfsmittel Ligninsulfonate genannt.

DE-OS 22 38 903 und EP-A 576 844 beschreiben die Verwendung von Poly-N-Vinylpyrrolidon als Trocknungshilfsmittel, EP-A 62 106, EP-A 601 518 und EP-PS 632 096 die Verwendung von Polyvinylalkoholen als Trocknungshilfsmittel.

DE-OS 195 39 460, EP-A 671 435 und EP-A 629 650 offenbaren Homo- und Copolymerisate der 2-Acrylamido-2-methylpropansulfonsäure als geeignete Trocknungshilfsmittel für wässrige Polymerisatdispersionen.

Der EP-A 467 103 ist die Herstellung von in wässrigen Medien redispergierbaren Polymerisatpulvern durch Trocknung und unter Zusatz von Copolymerisaten aus 50 bis 80 Mol-% einer olefinisch ungesättigten Mono- und/oder Dicarbonsäure und 20 bis 50 Mol-% eines C₃- bis C₁₂-Alkens und/oder Styrol als Trocknungshilfsmittel zu entnehmen.

Gemäß DE-OS 44 06 822 werden Pfropfpolymere aus Polyalkylenoxiden und ungesättigten Mono-/Dicarbonsäuren bzw. deren Anhydride nach erfolgter Derivatisierung mit primären/sekundären Aminen oder Alkoholen als Trocknungshilfsmittel empfohlen.

DE-OS 33 44 242 und EP-A 536 597 nennen Stärke und Stärkederivate als geeignete Trocknungshilfsmittel, während DE-OS 33 42 242 auch Cellulosederivate als geeignete Trocknungshilfsmittel offenbart.

DE-OS 493 168 schließlich empfiehlt Organopolysilane als Trocknungshilfsmittel.

Die nach dem geschilderten Stand der Technik bekannten Sprühhilfsmittel besitzen vielfältige Nachteile: Werden nämlich die aus DE-OS 24 45 813, EP-A 78 449 und EP-A 407 889 bekannten Naphthalinsulfonsäure- oder Phenolsulfonsäure-Formaldehyd-Kondensationsprodukte eingesetzt, so erhält man gefärbte Produkte. Kondensationsprodukte aus sulfonierten Phenolen, Harnstoffen, weiteren Stickstoffbasen und Formaldehyd als Sprühhilfsmittel, wie in DE-OS 41 18 007 beschrieben, sind zwar nach der Sprühtrocknung weiß, sie neigen jedoch in stark alkalischem Milieu, wie es für mineralische Bindemittel typisch ist, und in Gegenwart von Metallionen zum Nachfärben. Außerdem vermindert längeres Lagern die Redispergierbarkeit, da die Pulverpartikel unter dem Eigengewicht des Pulvers dazu neigen, miteinander zu verkleben bzw. zu verblocken. Ein weiterer Nachteil bei der Verwendung der oben genannten formaldehydhaltigen Kondensationsprodukte besteht darin, dass ihre wässrigen Lösungen einen nicht unerheblichen Gehalt an freiem Formaldehyd aufweisen. Dadurch kommt es bei der Trocknung zur Formaldehydkontamination des Abluftstroms, was eine kostenintensive Reinigung der Abluft notwendig macht.

Ein weiterer Nachteil der auf diese Art und Weise hergestellten Redispersionspulver ist die mögliche Freisetzung von Formaldehyd bei bzw. nach ihrer Anwendung aufgrund von Zersetzungsreaktionen, wie sie im basischen Milieu einer zementären Matrix ablaufen können. Die Folge davon ist, dass solche redispergierbaren Dispersionen, vor allem bei der Anwendung in Innenräumen, aufgrund von ökologischen und gesundheitlichen Aspekten, immer mehr gemieden werden.

Die aus der DE-OS 41 18 007 und der EP-A 467 103 bekannten Sprühhilfsmittel verschlechtern die Produkteigenschaften der damit versprühten Polymerisate als Bindemittel in der Anwendung. Nachteilig bei den Sprühhilfsmittel sind deren ganz oder teilweise neutralisierten wasserlöslichen Copolymerisate, die neben hydrophoben Monomeren auch 50 bis 80 Mol-% an Carboxylgruppen aufweisenden Monomeren einpolymerisiert enthalten (EP-A 467 103). Auf der Grundlage solcher Polymerisatpulver lassen sich beispielsweise keine Kunststoffputze formulieren, deren Wasserfestigkeit in vollem Umfang befriedigt. Dies gilt auch für die Sprühhilfsmittel auf Basis Vinylpyrrolidon/Vinylacetat gemäß EP-A 78 449 oder Polyvinylalkohol gemäß DE-OS 22 14 410. Ein weiterer Nachteil der Sprühhilfsmittel des Standes der Technik liegt darin begründet, dass sie sich bezüglich der Verfestigungsdauer der modifizierten Mörtel oder Betone nicht neutral verhalten, sondern die Verfestigung in der Regel stark verzögern. Die Sprühhilfsmittel gemäß EP-A 629 650 sind als Hilfsmittel bei der Trocknung wässriger Polymerisatdispersionen ebenfalls ungeeignet.

Unumstritten besitzen Pulver nicht nur logistische und ökonomische Vorteile gegenüber wässrigen Zubereitungen, da insbesondere kein Transport von Wasser stattfindet, sondern auch eine Reihe technischer Vorzüge. So entfällt beispielsweise die Zugabe von Bioziden zu Stabilisierungszwecken ebenso, wie die unter Umständen aufwendigen Maßnahmen zur Tankhygiene. Generell ist somit der Einsatz von Pulvern anzustreben.

Für die vorliegende Erfindung hat sich daher die Aufgabe gestellt, geeignete Trocknungshilfsmittel für die Herstellung pulverförmiger, polymerer Dispergiermittel bereitzustellen. Mit diesen Trocknungshilfsmitteln sollen die ursprünglichen Polymereigenschaften im Hinblick auf die Wirkung vor allem in hydraulischen Systemen nicht negativ beeinflusst werden und sich generell bei der Verarbeitung im Baustoffsystem keine unerwünschten Nebenwirkungen wie beispielsweise Verfärbungen oder eine Viskositätssteigerung einstellen. Das Trocknungshilfsmittel soll außerdem gut mit dem polymeren Dispergiermittel kompatibel sein, sodass eine mögliche Phasentrennung bzw. eine Separierung der Komponenten bzw. der Bestandteile vor dem Trocknungsprozess vermieden werden. Die Trocknungshilfsmittel sollen auch zur Herstellung von im wässrigem Medium redispergierbaren Polymerisatpulvern geeignet sein, welche auch als Additiv in mineralischen Bindemittel eingesetzt werden können, aber auch beispielsweise zur Herstellung von Kunststoffputzen geeignet sind. Schließlich sollen die so erhaltenen Polymerisatpulver frei von toxikologisch bedenklichen Bestandteilen wie z.B. Formaldehyd sein.

Gelöst wurde diese Aufgabe durch die erfindungsgemäße Verwendung von wasserlöslichen Polymeren bestehend aus
a) monoethylenisch ungesättigten, Säuregruppen tragenden Monomeren in saurer, teilweise oder vollständig neutralisierter Form der Reihe Acrylsäure, Methacrylsäure, 2-Ethylacrylsäure, 2-Propylacrylsäure, Vinylessigsäure, Croton- und Isocrotonsäure, Maleinsäure, Fumarsäure, Itaconsäure, Citraconsäure, Vinylsulfonsäure, Methallylsulfonsäure, 2-Acrylamido-2-methylpropylsulfonsäure, 4-Vinylphenylsulfonsäure, Vinylphosphonsäure sowie (Halb-)Ester und/oder Amide der genannten Carbonsäuren und deren Gemische und/oder deren Anhydride
   und gegebenenfalls
b) weiteren mit den Monomeren der Gruppe a) copolymerisierbaren Monomeren der Reihe (Meth)Acrylnitril, (Meth)Allylalkohol, Vinylether wie z.B. Hydroxy- und Alkoxypolyethylenoxy- bzw. -polypropylenoxyvinylether sowie analoge Allylether mit bis zu 10 sich wiederholenden Einheiten wie z.B. Polyethylenglycolmonoallylether oder gemischte Ethylenoxid (EO)-Propylenoxid (PO)-Monoallylether, N-Vinylacetamid,N-Vinyllactame,N-Vinylpyrrolidon,N-Vinylimidazol, siliciumfunktionelle Comonomere, wie (Meth-)Acryloxyalkyl-tri-(alkoxy)-Silane, Vinyltrialkoxysilaneund Vinylmethyldialkoxysilane mit C₁ bis C₅-Alkyl- bzw. Alkoxy-Resten sowie deren Derivate und deren Mischungen
als Trocknungshilfsmittel für die Herstellung pulverförmiger, polymerer Dispergiermittel, wobei das pulverförmige polymere Dispergiermittel eine Restfeuchte von < 5 Gew.-% aufweist.

Überraschend hat sich gezeigt, dass die erfindungsgemäß verwendeten Polymerisate bei der Sprühtrocknung deshalb äußerst wirksam sind, da ein Verkleben des Polymerisatpulvers während der Herstellung nun vorteilhaft verhindert wird. Weiterhin ist überraschend, dass die Sprühhilfsmittel gemäß Erfindung auch in Mengen eingesetzt werden können, die über die für die Sprühtrocknung benötigten Mengen hinaus gehen und dabei dennoch die Verblockungsneigung des Dispersionspulvers deutlich reduziert wird, ohne negativ auf die physikalischen Eigenschaften der mineralisch abbindenden Bindemittelsysteme zu wirken. Völlig überraschend und nicht vorhersehbar hat sich zudem gezeigt, dass die durch die beanspruchte Verwendung hergestellten redispergierbaren Pulver die Verlaufseigenschaften und somit die Verarbeitbarkeit sowie die Oberflächenbeschaffenheit von mineralisch abbindenden Bindemitteln positiv beeinflussen, ohne dabei dispergierend auf die einzelnen Komponenten zu wirken.

Bezüglich der pulverförmigen, polymeren Dispergiermittel wurde überraschend festgestellt, dass sie sich durch die Verwendung der beschriebenen wasserlöslichen Polymere speziell mit der konventionellen Sprühtrocknung in sehr guten Ausbeuten und ohne Verkrustungen an der Trocknerwand in hochwertiger Pulverform herstellen lassen, wobei keine nachträglichen Vermahlungs- und Siebungsschritte erforderlich sind. Dass dies zusätzlich zu den gemäß Aufgabenstellung gewünschten Anforderungen durch die beanspruchte Verwendung möglich ist, war so nicht vorherzusehen.

Die für die erfindungsgemäße Verwendung vorgesehenen wasserlöslichen Polymeren sind an sich bekannt. So beschreibt DE-OS 196 25 984 ein Verfahren zur Herstellung einer wässrigen Polymerdispersion durch Polymerisation von a) monoethylenisch ungesättigten, Säuregruppen tragenden Monomeren in saurer, teilweise oder vollständig neutralisierter Form in Gegenwart von hydrophilisierten, pflanzlichen und/oder tierischen und/oder technischen Fetten oder Ölen mit gegebenenfalls b) weiteren mit den Monomeren a) copolymerisierbaren Monomeren, wobei als Monomere a) unter anderem Acrylsäure, Methacrylsäure und Methallylsulfonsäure eingesetzt werden. Diese wässrigen Polymerdispersionen finden allerdings ausschließlich zur Emulgierung hydrophober Verbindungen oder bei der Herstellung und Verarbeitung von Leder und Pelzen Verwendung.

DE-OS 195 16 957 beschreibt unter anderem ein Verfahren zur Herstellung von wasserlöslichen, für Wasch- und Reinigungsmittel geeigneten Polymeren aus monoethylenisch ungesättigten Dicarbonsäuren, monoethylenisch ungesättigten Sulfonsäure- oder Sulfatgruppen-haltigen Monomeren und monoethylenisch ungesättigten Monomeren, die nach saurer Hydrolyse oder alkalischer Verseifung zu Monomereneinheiten mit kovalent gebundenen Hydroxylgruppen umgewandelt werden können und gegebenenfalls weiteren radikalisch copolymerisierbaren Monomeren, wobei die Zielpolymeren durch radikalische Polymerisation und Hydrolyse oder Verseifung in wässrigen Medien bei 40 bis 180 °C gebildet werden. Zwar ist in diesem Dokument auch die Verwendung der so erhaltenen Polymerisate als Dispergiermittel beschrieben, jedoch nicht deren Eignung als Trocknungshilfsmittel bei der Herstellung von redispergierbaren Polymerisatpulvern oder pulverförmigen, polymeren Dispergiermitteln.

Erfindungsgemäß wurde nun festgestellt, dass die angegebenen wasserlöslichen Polymere als Trocknungshilfsmittel für die Herstellung pulverförmiger, polymerer Dispergiermittel eingesetzt werden können. Zur Modifikation von mineralischen Bindemitteln eingesetzte Polymerisate weisen üblicherweise eine Glasübergangstemperatur unterhalb von 60 °C auf, weshalb zur wirtschaftlichen Herstellung von pulverförmigen Polymerisaten auch Sprühhilfsmittel zugesetzt werden müssen. Dispergiermittel für zementäre Systeme weisen als wesentliches Strukturmerkmal Polyglycolhaltige Seitenketten auf, die ebenfalls niedrige Glasübergangstemperaturen besitzen, die gemäß Literatur zwischen 158 und 233° Kalvin liegen sollen (vgl. z.B. J. Brandrup, E.H. Immergut, Polymer Handbook 3rd Ed., Sec. VI, 229, J. Wiley, 1989). Aufgrund des Merkmals der niedrigen Glasübergangstemperaturen zeigen die Dispergiermittel relativ niedrige Erweichungstemperaturen, die deutlich unter den bei der Sprühtrocknung eingestellten Trocknungstemperaturen liegen. Um die Herstellung von pulverförmigen Dispergiermitteln mittels Sprühtrocknung zu ermöglichen bzw. diese Sprühtrocknung unter wirtschaftlichen Bedingungen betreiben zu können, ist der Zusatz von Trocknungshilfsmitteln erforderlich. Redispergierbare Polymerisatpulver und pulverförmige Dispergiermittel weisen somit die gemeinsame physikalische Eigenschaft einer niedrigen Glasübergangstemperatur, insbesondere einer Glasübergangstemperatur von ≤ 60 °C auf.

Im Rahmen der vorliegenden Erfindung haben sich insbesondere wasserlösliche Polymere geeignet gezeigt, die mindestens 20 Gew.-%, vorzugsweise mindestens 30 Gew.-% an Monomeren a) und höchstens 80 Gew.-% an Monomeren b) enthalten. Weiterhin enthalten die wasserlöslichen Polymere bevorzugt mindestens 5 Gew.-%, insbesondere mindestens 10 Gew.-% an Monomberen b).

Als weiterhin vorteilhaft hat es sich im Rahmen der erfindungsgemäßen Verwendung gezeigt, wenn die Säuregruppen der monoethylenisch ungesättigten Monomeren a) vor, während oder nach erfolgter Polymerisation zumindest teilweise neutralisiert werden. Die zumindest teilweise Neutralisation kann insbesondere mit Hilfe von Alkali- und/oder Erdalkalihydroxiden, Ammoniak, einem Amin, Polyamin oder Aminoalkohol erfolgen.

Bevorzugte Monomere der Gruppe a) sind (Meth)Acrylamid sowie Hydroxyalkyl(meth)acrylat, mit Alkyl = C₁ bis C₅, Hydroxyalkyl-polyethylenoxy- und -propylenoxy- bzw. -butylenoxy(meth)-acrylat mit Alkyl = C₁ bis C₅.

Für bestimmte Verwendungsfälle kann es sich als vorteilhaft erweisen, wenn das wasserlösliche Polymer ein mittleres Molekulargewicht Mₙ von 1000 bis 100.000 g/mol und vorzugsweise zwischen 2000 und 70.000 g/mol, besonders bevorzugt zwischen 3000 und 50.000 g/mol aufweist, was die vorliegende Erfindung ebenfalls berücksichtigt.

Hinsichtlich der Monomeren b) ist anzumerken, dass für Polyethylenoxyvinylether, Polypropylenoxyvinylether und die analogen Polyethylenoxyallylether bzw. Polypropylenoxyallylether, wie z.B. Polyethylenglycolmonoallylether oder gemischte EO-PO-Monoallylether zwar prinzipiell die Kettenlänge der Polyalkyloxybausteine der Monomeren nicht begrenzt ist, dass allerdings n ≤ 10 gewisse Vorteile zeigt.

Die erfindungsgemäß eingesetzten wasserlöslichen Polymere können mit einer Reihe möglicher Herstellungsverfahren erhalten werden. Bevorzugt sind die radikalische Polymersiation in Wasser oder in einem wasserhaltigen Gemisch mit maximal 30 Gew.-% eines organischen Lösemittels, aber auch Emulsionspolymerisationen oder eine lösemittelfreie Substanzpolymerisation.

Die wasserlöslichen Polymere können als Trocknungshilfsmittel trocken, z.B. in Pulverform, aber auch in Form wässriger Lösungen eingesetzt werden, die 1 bis 99 Gew.-% des wasserlöslichen Polymers enthalten, wobei Mengen zwischen 20 und 70 Gew.-% bevorzugt und solche zwischen 35 und 60 Gew.-% ganz besonders bevorzugt sind.

Unabhängig davon, wie die wasserlöslichen Polymere erhalten wurden bzw. davon, ob die Trocknungshilfsmittel in Pulverform oder in wässriger Lösung eingesetzt werden, sieht die vorliegende Erfindung vor, dass die Trocknungshilfsmittel dem Herstellungsprozess von Dispergiermitteln in Anteilen bis maximal 50 Gew.-% und bevorzugt zwischen 5 und 30 Gew.--%, insbesondere von 10 bis 20 Gew.-%, bezogen auf das Dispergiermittel, zugegeben werden.

Da Dispergiermittel insbesondere mit Hilfe bekannter Sprühtrocknungsprozesse in Pulverform erhalten werden, berücksichtigt die vorliegende : Erfindung auch die Verwendung der TrocknungshilfsmitteJ vorzugsweise in diesen Prozessen. Das Trocknungshilfsmittel kann hierbei insbesondere in einem Kontakttrockner, einem Wirbelschichttrockner oder Bandtrockner eingesetzt werden oder in einem Trocknungsprozess, der mit Hilfe von Wärmestrahlung wie z.B. Infrarot- oder Mikrowellenstrahlung durchgeführt wird.

Vorzugsweise können die wasserlöslichen Polymeren bei der Herstellung eines Dispergiermittels eingesetzt werden, das aus Polyoxyalkylen-haltigen Strukturelementen, Carbonsäure- und/oder Carbonsäureanhydrid-Monomeren besteht, wie sie insbesondere aus den Patentdokumenten WO 97/39 037, EP-A 0 610 699 oder WO 98/28 353 bekannt sind.

Im Hinblick auf das pulverförmige, polymere Dispergiermittel sieht die Erfindung vor, dass die Verwendung des Trocknungshilfsmittels so erfolgt, dass ein pulverförmiges, polymeres Dispergiermittel erhalten wird, das eine Restfeuchte < 5 Gew.-% und vorzugsweise < 2 Gew.-% aufweist.

Damit die polymeren Dispergiermittelpulver auch bei höheren Temperaturen, während des Transports und der Lagerung bzw. in entsprechend heißen Klimazonen verklebungs- und verbackungsresistent bleiben, kann es durchaus sinnvoll sein, dem mit dem Trocknungshifsmittel hergestellten polymeren Dispergiermittel nach dessen Herstellung noch entsprechende mehr oder weniger feinteilige qualitätsverbessernde Zusätze zuzumischen. Die Art dieser Zusätze unterliegt dabei keiner besonderen Beschränkung, jedoch sollten sich die jeweiligen Materialien gut mit dem Dispergiermittel physikalisch und chemisch vertragen. Die dispergierende Wirkung des Mittels sollte nicht negativ beeinflusst werden und die qualitätsverbessernden Eigenschaften sollten sich bereits durch Zugabe,von nur geringen Mengen der Zusätze einstellen. In diesem Zusammenhang sieht die vorliegende Erfindung als qualitätsverbessernde Zusätze insbesondere die Verwendung von Kreide, Kieselsäure, Calzit, Dolomit, Quarzmehl, Bentonit, Bimsmehl, Titandioxid, Aluminiumoxid, Flugasche, Zemente, Silikate, Talkum, Glimmer, Anhydrit, Kalk, Kieselgur, Gips, Magnesit, Tonerde, Kaolin, Schiefer- und Gesteinsmehle, Bariumsulfat sowie Gemische daraus vor. Besonders bevorzugt sollten die qualitätsverbessernden Zusätze dabei in feinteiliger Form und hier insbesondere mit einer Teilchengröße von 0,1 bis 1000 µm eingesetzt werden.

Die unter erfindungsgemäßer Verwendung der Trocknungshilfsmittel erhaltenen polymeren Dispergiermittel sind vor allem als Additive für bauchemische Anwendungen geeignet und können erfindungsgemäß bevorzugt mineralischen Bauwerkstoffen in Anteilen von 0,05 bis 5 Gew.-%, bezogen auf das abbindende Grundsystem zugesetzt werden, wobei die Erfindung insbesondere den Zusatz der gemäß Erfindung erhaltenen pulverförmigen, polymeren Dispergiermittel zu mineralischen Systemen, wie Bitumen-haltige Baustoffe, auf hydraulisch abbindenden Bindemitteln, wie Zement, bzw. auf latent hydraulisch abbindenden Bindemitteln basierende Baustoffe, Gips, Anhydrit oder sonstige Calciumsulfat-basierende Baustoffe, keramische Massen, Feuerfestmassen, Ölfeldbaustoffe und dispersionsbasierende Baustoffe, vorsieht.

Weiterhin ist erfindungsgemäß eine Ausführungsform bevorzugt, die vorliegende Erfindung eine Variante bei der das Trocknungshilfsmittel einer wässrigen Dispersion eines redispergierbaren organischen Bindemittels, bestehend aus einem Basispolymer aus der Gruppe der Vinylester-, Styrol-, Acrylat-, Vinylchlorid- oder Polyurethan-Polymerisate zugesetzt wird.

Dabei kann die wässrige Dispersion eines redispergierbaren organischen Bindemittels zusätzlich und jeweils bezogen auf das Basispolymer
a) bis zu 30 Massen-% eines Zementverflüssigers und/oder
b) bis zu 30 Massen-% eines Schutzkolloids, wie z.B. Polyvinylalkohol und/oder
c) bis zu 2 Massen-% mindestens einer oberflächenaktiven Substanz, wie Emulgatoren oder Netzmittel
   und/oder
d) bis zu 3 Massen-% eines Verdickungsmittels wie Polyacrylsäure und/oder

4) bis zu 2 Massen-% eines Entschäumers
enthalten.
Im Rahmen dieser Erfindung und bezüglich der mit den Trocknungshilfsmitteln hergestellten Produkte in Form von Redispersionspulvern können diesen weiterhin
a) 1 bis 30 Gew.-%, bezogen auf das Gesamtgewicht polymerer Bestandteile, an feinem Antiblockmittel wie fein gemahlene Aluminiumsilikate, Kieselgur, kolloidales Silicagel, pyrogene Kieselsäure, Fällungskieselsäure, Mikrosilica, Kaolin, Talkum, Zemente, Diatomeenerde, Calcium- und/oder Magnesiumcarbonat sowie Magnesiumhydrosilikat
   und
b) 0,1 bis 10 Gew.-%, bezogen auf das Basispolymerisat, an weiteren Zuschlagstoffen zugemischt sein.

Hinsichtlich der erhaltenen Redispensionspulver ist als bevorzugt anzusehen, dass diese in mineralisch abbindenden Baustoffen sowie in Fliesenklebern, Spachtelmassen, Gipsbaustoffen, Kalkmörteln, Zementmörteln, Putzen und Trockenmörteln eingesetzt werden. Möglich ist aber auch deren Einsatz in Klebstoffzusammensetzungen und Anstrichfarben und/oder als Alleinbindemittel für Beschichtungsmittel.

Schließlich ist von der vorliegenden Erfindung auch ein redispergierend wirkendes Pulver umfasst, welches unter Verwendung der wasserlöslichen Polymere als Trocknungshilfsmittel bzw. nach einer der beschriebenen Varianten herstellbar ist.

Dabei wird ebenfalls eine Baustoffzusammensetzung mitbeansprucht, die
- 10 bis 60 Gew.-% eines mineralischen Bindemittels,
- 0,1 bis 20 Gew.-% eines mit dem Trocknungshilfsmittel gemäß einem der Ansprüche 1 bis 9 hergestellten Polymerisatpulvers,
- bis zu 25 Gew.-% an üblichen Hilfsmitteln, jeweils bezogen auf die Gesamtzusammensetzung
   und
- als Restmenge Zuschläge wie Sand, Füllstoffe, Pigmente, natürliche Fasern und/oder synthetische Fasern enthält.

Mit der vorliegenden erfindungsgemäßen Verwendung von wasserlöslichen Polymeren als Trocknungshilfsmittel für die Herstellung von pulverförmigen, polymeren Dispergiermitteln können nun die sonst problematischen Sprühtrocknungsprozesse ohne Schwierigkeiten durchgeführt werden, da sich die bislang insbesondere in wässrigen Lösungen eingesetzten Ausgangs-Polymere der Dispergiermittel selbst unter extremer Temperaturbelastung nun nicht mehr zersetzen und die resultierenden Produkte als polymere Pulver nun nicht mehr z.B. in öliger Form anfallen bzw. verklumpen. Die in der Folge bisher fast regelmäßig anfallenden Verklebungen an der Trocknerwand können gänzlich vermieden werden, aufwendige Mahlschritte mit sich anschließender Siebung, wie sie durch die Anteile an anorganischen Inertmaterialien bislang auftreten, entfallen vollständig.

Die nachfolgenden Beispiele veranschaulichen die Vorteile der erfindungsgemäßen Verwendung.

### Beispiele

### I. Herstellung von Redispersionspulvern (Vergleichsbeispiele):

Zur Herstellung der jeweiligen Lösungen der Beispiele 1 bis 4 wurden mit Polyvinylalkohol stabilisierte wässrige Dispersionen mit je einem Feststoffgehalt von 50 Gew.-% auf Basis eines Vinylacetat-Ethylen-Copolymerisats (Dispersion 1) bzw. auf Basis eines Ethylen-Vinylchlorid-Vinyllaurat-Terpolymerisats (Dispersion 2) der Wacker Polymer Systems GmbH eingesetzt.

Außerdem wurden nach folgenden Synthesebeispielen hergestellte Trocknungshilfsmittel verwendet:

### Synthesebeispiel 1:

In einem Reaktionsgefäß, ausgestattet mit Rückflusskühler, Rührer, Thermometer, Tropftrichter und Stickstoffbegasung wurden in 460 g Wasser, 98g Maleinsäureanhydrid, 33,2g 2-Acrylamido-2-methylpropansulfonsäure (AMPS), 65 g Hydroxypropylacrylat und 36 g Acrylsäure gelöst. Unter Stickstoffzufuhr wurde die Reaktionslösung im Wasserbad auf 60 °C erwärmt und es wurden 4,3 g Ammoniumperoxodisulfat sowie 8,5 g Mercaptoethanol in 20 g Wasser zugetropft. Die Reaktionsmischung wurde 2 Stunden lang bei 70 °C unter Stickstoff gerührt, danach auf Raumtemperatur abgekühlt und mit Natronlauge auf pH 7,0 neutralisiert. Das resultierende Produkt war eine klare Polymerlösung mit einem Feststoffgehalt von 44 Gew.-% und einem Molekulargewicht Mw ~ 5000.

### Synthesebeispiel 2:

Entsprechend dem Verfahren von Synthesebeispiel 1 wurden in 350 g Wasser 46 g Acrylsäure, 43,3 g Hydroxypropylacrylat, 43,4 g Itaconsäure und 30 g Natriummethallylsulfonsäure in Gegenwart von 2,5 g Ammoniumperoxodisulfat und 5,0 g 2-Mercaptoethanol umgesetzt. Das Resultat war eine klare Polymerlösung mit einem Feststoffgehalt von 40 Gew.-% und einem Molekulargewicht Mw ~ 7000.

Im Sprühtrocknungsprozess wurden folgende Lösungen verwendet:

### Beispiel 1 (Vergleichsbeispiel):

4000 Gew.-Teile der Dispersion 1 wurden mit 750 g einer 44 %-igen, wässrigen Lösung eines Trocknungshilfsmittels gemäß Synthesebeispiel 1 (entspricht 16,5 Massen-% Copolymer auf 100 Massen-% Dispersionsfeststoff) homogen vermischt und mit 1075 g Wasser auf einen Feststoffgehalt von 40 Massen-% verdünnt.

### Beispiel 2 (Vergleichsbeispiel):

4000 Gew.-Teile der Dispersion 1 wurden mit 900 g einer 40 %-igen, wässrigen Lösung eines Trocknungshilfsmittels gemäß Synthesebeispiel 2 (entspricht 18 Massen-% Copolymer auf 100 Massen-% Dispersionsfeststoff) homogen vermischt und mit 1000 g Wasser auf einen Feststoffgehalt von 40 Massen-% verdünnt.

### Beispiel 3 (Vergleichsbeispiel):

4000 Gew.-Teile der Dispersion 2 wurden mit 795 g einer 44 %-igen, wässrigen Lösung eines Trocknungshilfsmittels gemäß Synthesebeispiel 1 (entspricht 17,5 Massen-% Copolymer auf 100 Massen-% Dispersionsfeststoff) homogen vermischt und mit 1080 g Wasser auf einen Feststoffgehalt von 40 Massen-% verdünnt.

### Beispiel 4 (Vergleichsbeispiel):

4000 Gew.-Teile der Dispersion 1 wurden mit 1000 g einer 40 %-igen, wässrigen Lösung eines Trocknungshilfsmittels gemäß Synthesebeispiel 2 (entspricht 20 Massen-% Copolymer auf 100 Massen-% Dispersionsfeststoff) homogen vermischt und mit 1000 g Wasser auf einen Feststoffgehalt von 40 Massen-% verdünnt.

### Beispiel 5 (Vergleich):

Vinnapas RE 5011, ein kommerziell erhältliches Redispersionspulver der Wacker Polymer Systems GmbH.

Die sich anschließende Sprühtrocknung wurde in einem Labortrockner der Fa. Niro durchgeführt. Die jeweils zu trocknende wässrige Polymerisatdispersion wurde mittels einer rotierenden Scheibe versprüht, wobei als Verdüsungskomponente auf 4 bar vorgepresster Stickstoff diente. Die Eingangstemperatur des Trocknergases betrug 130 °C, dessen Ausgangstemperatur lag bei 60 bis 64 °C.

Die aus den Lösungen der Beispiele 1 bis 4 erhaltenen Pulver sind in wässrigem Medium in voll befriedigender Weise redispergierbar. Wie die Tabelle 2 zeigt, wiesen die so hergestellten Redispersionspulver wesentlich bessere Verlaufseigenschaften als das Vergleichsbeispiel 5 auf, wobei die jeweils verwendeten polymeren Trocknungshilfsmittel in reinen Portlandzement- bzw. Tonerdeschmelzzementmörteln selbst nicht dispergierend wirken (siehe Testrezeptur 2 und Tabelle 2).

Bedingt durch die sehr guten Verlaufseigenschaften weisen die gemäß Vergleichsbeispielen 1 bis 4 hergestellten Redispersionspulver auch sehr gute Selbstheilungseigenschaften auf, ohne das Abbindeverhalten der Masse zu verzögern (siehe Tabelle 1). Die Selbstheilungseigenschaft wird dabei durch einen sogenannten Messerschnitt-Test beurteilt. Das Abbindeverhalten wird zum einen durch die Bestimmung der Shore D-Härte und zum anderen durch das Erstarrungsverhalten nach Vicat charakterisiert.

| Testrezeptur 1: | | | | | | |
|---|---|---|---|---|---|---|
| [Massen-%] | **Rez. 1.1** | **Rez. 1.2** | **Rez. 1.3** | **Rez. 1.4** | **Rez. 1.5** | **Rez. 1.6** |
| Portlandzement (CEM I 42,5 R Kiefersfelden) | 18,50 | 18,50 | 18,50 | 18,50 | 18,50 | 18,50 |
| Tonerdeschmelzzement (Fondu Lafarge) | 11,50 | 11,50 | 11,50 | 11,50 | 11,50 | 11,50 |
| Calciumsulfat (wasserfrei, synthetischer Anhydrit Solvay) | 6,50 | 6,50 | 6,50 | 6,50 | 6,50 | 6,50 |
| Quarzsand H33 (0,1 - 0,315 mm) | 41,20 | 41,20 | 41,20 | 41,20 | 41,20 | 40,80 |
| Kalksteinmehl Omyacarb 20 BG (10 - 20 *µ*m) | 19,40 | 19,40 | 19,40 | 19,40 | 19,40 | 19,40 |
| Hydroxycelluloseether (Tylose H 300 P2) | 0,05 | 0,05 | 0,05 | 0,05 | 0,05 | 0,05 |
| Lithiumcarbonat | 0,10 | 0,10 | 0,10 | 0,10 | 0,10 | 0,10 |
| Entschäumer Agitan P 800 | 0,15 | 0,15 | 0,15 | 0,15 | 0,15 | 0,15 |
| Kaliumnatriumtartrat-Tetrahydrat | 0,40 | 0,40 | 0,40 | 0,40 | 0,40 | 0,40 |
| Fließmittel Meflux 1641 (SKW Polymers GmbH) | -- | -- | -- | -- | -- | 0,40 |
| | | | | | | |
| Redispersionpulver hergestellt nach Beispiel 1 | 2,20 | -- | -- | -- | -- | -- |
| Redisperionspulver hergestellt nach Beispiel 2 | -- | 2,20 | -- | -- | -- | -- |
| Redispersionspulver hergestellt nach Beispiel 3 | -- | -- | 2,20 | -- | -- | -- |
| Redispersionspulver hergestellt nach Beispiel 4 | -- | -- | -- | 2,20 | -- | -- |
| Vergleichsbeispiel 5 mit Standard Redispersionspulver | -- | -- | -- | -- | 2,20 | 2,20 |
| | | | | | | |
| Anmachwasser: je 20,00 Massen-% | | | | | | |
| **Pulvermischung (Summe der Komponenten)** | **100,0** | **100,0** | **100,0** | **100,0** | **100,0** | **100,0** |

**Tabelle 1: Anwendungstechnische Austestung**

| | **Fließmaß [mm] nach x min. gem. EN 12 706** | | | | | **Messerschnitt-Test nach x min.** | | | | | **Shore D≥50** | **Erstarren (Vicat) [h:min]** | |
|---|---|---|---|---|---|---|---|---|---|---|---|---|---|
| | 5' | 15' | 30' | 45' | 60' | 7' | 15' | 30' | 45' | 60' | [h:min] | EB | EE |
| Rez. 1.1 | 160 | 163 | 163 | 162 | 162 | 1 | 1 | 2 | 2 | 2 | 7:00 | 3:00 | 3:40 |
| Rez. 1.2 | 157 | 152 | 150 | 145 | 137 | 1 | 2 | 2 | 2 | 3 | 6:30 | 2.45 | 3:30 |
| Rez. 1.3 | 154 | 154 | 154 | 152 | 150 | 1 | 1 | 2 | 2 | 3 | 6:00 | 2:30 | 3:00 |
| Rez. 1.4 | 158 | 160 | 163 | 163 | 163 | 1 | 2 | 2 | 2 | 2 | 7:00 | 3:10 | 3:40 |
| Rez. 1.5 | 59 | 40 | 35 | 30 | 30 | 5 | 5 | 6 | 7 | 7 | 6:00 | 2:15 | 3:00 |
| Rez. 1.6 | 158 | 160 | 163 | 163 | 163 | 1 | 2 | 2 | 2 | 3 | 7:15 | 3:20 | 4:15 |

### Mischvorschrift:

½ min. einstreuen, dann
½ min. sumpfen, dann
2 min. mit einem Löffel rühren, dann
1 min. Reifezeit, und
1 min. mit einem Löffel rühren

Fließmaß gemäß EN 12 706: mit Ring d = 30 mm, h = 50 mm Die Fließmaßbestimmung bzw. der Messerschnitt-Test wurden nach x min. nach Mischbeginn durchgeführt.

### Beurteilungsmaßstab (Messerschnitt-Test):

Note 1: Schnitt verläuft vollständig
Note 2: Schnitt verläuft, jedoch sichtbar
Note 3: Schnitt verläuft, jedoch Rand sichtbar
Note 4: Schnitt verläuft, jedoch Rand gut sichtbar
Note 5: Schnitt verläuft schlecht
Note 6: Schnitt verläuft schlecht, Einschnitt
Note 7: Schnitt verläuft nicht

| Testrezeptur 2: | | | | | | |
|---|---|---|---|---|---|---|
| [Massen-%] | **Rez. 2.1** | **Rez. 2.2** | **Rez. 2.3** | **Rez. 2.4** | **Rez. 2.5** | **Rez. 2.6** |
| Portlandzement (CEM I 42,5 R Kiefersfelden) | 900,00 | 900,00 | 900,00 | --- | --- | --- |
| Tonerdeschmelzzement (Fondu Lafarge) | --- | --- | --- | 900,00 | 900,00 | 900,00 |
| Standard Quarzsand (0-2 mm, EN 196-1) | 1350,00 | 1350,00 | 1350,00 | 1350,00 | 1350,00 | 1350,00 |
| Entschäumer (Agitan P 800) | 0,45 | 0,45 | 0,45 | 0,45 | 0,45 | 0,45 |
| Dispergiermittel (Melflux 1641 F, SKW Polymers GmbH) | 0,45 | | | 0,45 | | |
| Trocknungshilfsstoff gem. Beispiel 1 (bez. a. Feststoff) | | 0,45 | | | 0,45 | |
| Trocknungshilfsstoff gem. Beispiel 2 (bez. a. Feststoff) | | | 0,45 | | | 0,45 |
| | | | | | | |
| Anmachwasser (Wasser/Zement-Verhältnis = 0,36) | 324,00 | 324,00 | 324,00 | 324,00 | 324,00 | 324,00 |

Die Mörtelmischungen wurden gemäß DIN EN 196-1, Abs. 6.3 zubereitet. Das Fließverhalten wurde in einem Fließrinnentest gemäß der Vergussmörtelrichtlinie des Deutschen Betonvereins e.V. (Fassung vom September 1990, redaktionell überarbeitet 1996) jeweils nach 5, 30 und 60 min. bestimmt.

**Tabelle 2:**

| **Fließrinnenmaß [cm]** | **Rez. 2.1** | **Rez. 2.2** | **Rez. 2.3** | **Rez. 2.4** | **Rez. 2.5** | **Rez. 2.6** |
|---|---|---|---|---|---|---|
| nach 5 min. | 63 | n.f. | n.f. | 61 | 20 | 21 |
| nach 30 min. | 60 | n.f. | n.f. | 59 | 20 | n.f. |
| nach 60 min. | 53 | n.f. | n.f. | 27 | n.f. | n.f |

| | | | | | | |
|---|---|---|---|---|---|---|
| n.f.: nicht fließfähig | | | | | | |

### II. Herstellung von pulverförmigen Dispergiermitteln:

### Vergleichsbeispiele (Trocknungsversuche)

### Beispiel 1.1:

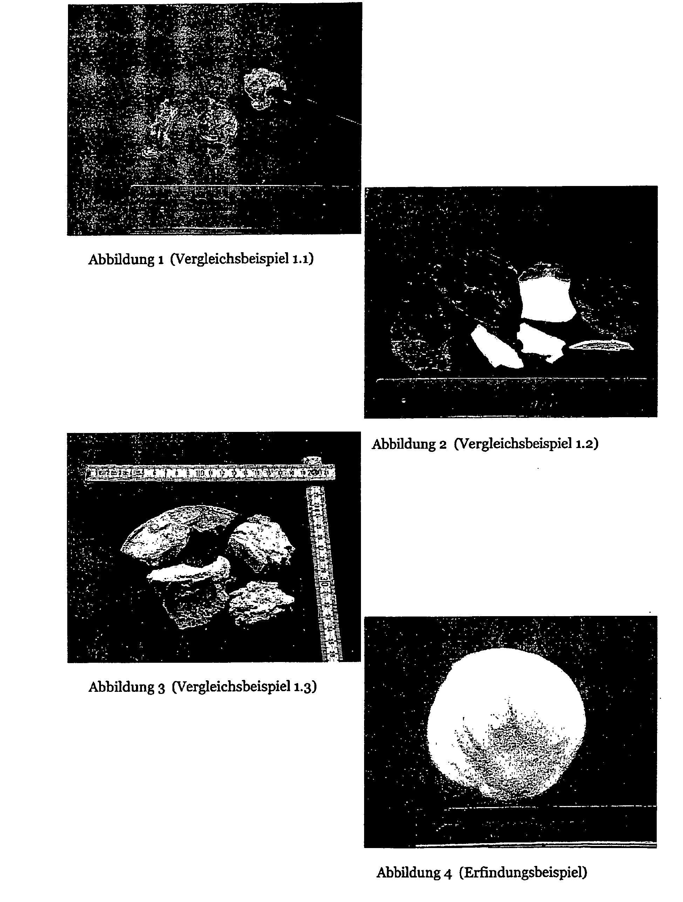

Eine gemäß DE 195 13 126 hergestellte wässrige Dispergiermittel-Lösung wurde in einem. Rotationsverdampfer bei 80 °C und 100 mbar 2 h lang einrotiert. Dabei bildete sich eine sehr zähe, wachsartige Masse die schließlich im warmen Zustand von der Glaswandung abgekratzt wurde. Nach dem Abkühlen auf Raumtemperatur resultierten wachsartige, klebrige Polymerklumpen (Abbildung 1), die aufgrund ihrer Konsistenz nicht weiter vermahlen werden konnten. Eine Überführung der wässrigen Polymerlösung in ihr entsprechendes Polymerpulver ist auf diese Art und Weise nicht möglich.

### Beispiel 1.2:

Eine gemäß DE 199 26 611 A1 hergestellte wässrige Dispergiermittel-Lösung wurde in einer dünnen Schicht von ca. 3 mm auf einem Backblech ausgebracht und bei 130 °C 4 h lang in einem Trockenschrank getrocknet. Mit steigendem Feststoffgehalt wurde die Lösung zunehmend viskoser und es bildeten sich Blasen. Die Konsistenz des heißen Konzentrats war klebrig und gummielastisch. Bei Abkühlen auf Temperaturen von unter 40 °C erstarrte die Masse zu einer spröden Schicht, die vom Blech abgekratzt wurde. Es war zu beobachten, dass bei zunehmender Schichtdicke die gummielastische Polymermasse nicht mehr vollständig durchtrocknet. Diese Polymermasse ist nach dem Abkühlen auf Raumtemperatur deshalb noch leicht klebrig und der Restfeuchtegehalt schwankt zwischen 4 bis 10 %. Ferner traten beim Trocknen der Polymerlösung ab einer Schichtdicke von ca. 2 mm Inhomogenitäten auf, die allein schon durch eine unterschiedliche Färbung der obersten und untersten Polymerschicht optisch wahrgenommen werden kann (Abbildung 2).

### Beispiel 1.3:

Eine gemäß DE 199 26 611 A1 hergestellte wässrige Dispergiermittel-Lösung wurde mit 20 Massen-% an feinem CaCO₃ mit einer Korngröße von < 200 µm versetzt und in einem Kontakttrockner der Fa. List AG bei 80 °C und 60 mbar getrocknet. Dabei wurden nach einer Trockenzeit von 40 min. ausschließlich große, harte Klumpen erhalten (Abbildung 3).

### Erfindungsbeispiele (Trocknungsversuche)

Gemäß DE 195 13 126 sowie gemäß DE 199 26 611 A1 hergestellte wässrige Dispergiermittel-Lösungen wurden jeweils ohne [A; B] und mit Trocknungshüfsmitteln (Hilfspolymer HP) [A1, A2, B1, B2] mittels einer Dosierpumpe in einen Laborsprühtrockner der Fa. LabPlant eingespeist und im Heißluftstrom versprüht. Die Eingangstemperatur betrug 180 °C, die Ausgangstemperatur der Trockenluft lag bei 50 bis 70 °C. Als Trocknungshilfsmittel HP wurden Polymere HP1 und HP2 folgender Zusammensetzung verwendet:

| | | |
|---|---|---|
| HP 1: | Maleinsäureanhydrid | 36,8 Massen-% |
| | 2-Acrylamido-2-methyl- | 38,8 Massen-% |
| | propansulfonsäure (AMPS) | |
| | Hydroxypropylacrylat | 24,4 Massen-% |
| HP 2: | Acrylsäure | 29,0 Massen-% |
| | Hydroxypropylacrylat | 58,3 Massen-% |
| | Na-Methallylsulfonsäure | 12,7 Massen-% |

Deren Herstellung erfolgte nach folgenden Verfahren:
HP1:
   In einem Reaktionsgefäß, ausgestattet mit Rückflusskühler, Rührer, Thermometer, Tropftrichter und Stickstoffbegasung wurden in 530 g Wasser 98 g Maleinsäureanhydrid, 103,5 g 2-Acrylamido-2-methylpropansulfonsäure (AMPS) und 65,1 g Hydroxypropylacrylat gelöst. Unter Stickstoffzufuhr wurde die Reaktionslösung im Wasserbad auf 60 °C erwärmt und 4,3 g Ammoniumperoxodisulfat sowie 8,5 g Mercaptoethanol in 20 g Wasser zugetropft. Die Reaktionsmischung wurde 2 Stunden lang bei 70 °C unter Stickstoff gerührt, danach auf Raumtemperatur abgekühlt und mit Natronlauge auf pH 7,0 neutralisiert. Das resultierende Produkt war eine klare Polymerlösung mit einem Feststoffgehalt von 40 Gew.-% und einem Molekulargewicht Mw ~ 5000.
HP2:
   Entsprechend dem Verfahren zu HP1 wurden unter einer Stickstoffatmosphäre in 380 g Wasser 46 g Acrylsäure, 92,2 g Hydroxypropylacrylat und 20 g Natriummethallylsulfonsäure gelöst. Anschließend wurde die Lösung mit 55 g einer 50 %-igen Natriumhydroxid-Lösung neutralisiert. Unter Stickstoffzufuhr wurde dann die Reaktionslösung im Wasserbad auf 55 °C erwärmt und die Polymerisation durch Zugabe von 20 g einer 20 %-igen wässrigen Ammoniumpersulfatlösung gestartet. Die Reaktion wurde 4 Stunden lang bei 60 °C unter Stickstoff gerührt. Das Resultat war eine klare Polymerlösung mit einem Feststoffgehalt von 45 Gew.-% und einem Molekulargewicht Mw ~ 7000.

Die Ergebnisse der Sprühtrocknung zeigt nachfolgende Tabelle 3. Die Bezeichnung HP steht für den Gehalt an jeweiligem Hilfspolymer, ausgedrückt in Massen-% bezogen auf den Feststoffgehalt der zu trocknenden Polymerlösung.

**Tabelle 3:**

| Versuch | Polymer gemäß | HP [%] | Wandbelag des Trockners | Pulverausbeute [% d. Th.] | Restfeuchte [%] |
|---|---|---|---|---|---|
| A | DE 195 13 126 | --- | Öl, ablaufend | n.a. | n.a. |
| B | DE 199 26 611 A1 | --- | Öl, ablaufend + einige gummielastische Klumpen | n.a. | n.a. |
| A1 | DE 195 13 126 | 10 | Kein | > 98 % | < 1 % |
| A2 | DE 195 13 126 | 15 | Kein | > 98 % | <1 % |
| B1 | DE 199 26 611 A1 | 10 | Kein | > 98 % | < 1 % |
| B2 | DE 199 26 611 A1 | 15 | Kein | > 98 % | <1 % |

| | | | | | |
|---|---|---|---|---|---|
| n.a.: nicht anwendbar | | | | | |

Abbildung Nr. 4 zeigt das pulverförmige Dispergiermittel des Versuchs B1 nach der Sprühtrocknung.

### 3. Anwendungsbeispiele:

Die folgenden Beispiele erläutern die Fließfähigkeit und physikalischen Eigenschaften zementärer Systeme. Im Vergleich wurden als Dispergiermittel wässrige Polymerlösungen (A; B) eingesetzt und pulverförmige Dispergiermittel eingesetzt, die mit Hilfe von Trocknungshilfsmitteln (HP) sprühgetrocknet worden sind (A1, A2 bzw. B1, B2):
· A: wässrige Lösung eines polymeren Dispergiermittels (PDM 1) gemäß DE 195 13 126
· B: wässrige Lösung eines polymeren Dispergiermittels (PDM 2) gemäß DE 199 26 611 A1
· A1: sprühgetrocknetes Pulver nach Zusatz von 10 Massen-% HP 1 zur wässrigen Lösung des PDM 1
· A2: sprühgetrocknetes Pulver nach Zusatz von 15 Massen-% HP 2 zur wässrigen Lösung des PDM 1
· B1: sprühgetrocknetes Pulver nach Zusatz von 10 Massen-% HP 1 zur wässrigen Lösung des PDM 2
· B2: sprühgetrocknetes Pulver nach Zusatz von 15 Massen-% HP2 zur wässrigen Lösung des PDM 2

Als Standardrichtrezeptur wurde folgende Mischung gewählt:

| | Masse [g] |
|---|---|
| Portlandzement (CEM 1 42,5 R) | 900.00 |
| Standard Quarzsand (0-2 mm, EN 196-1) | 1350.00 |
| Entschäumer (Agitan P 800) | 0.45 |
| Dispergiermittel | 0,2 (A-, B-Serie) bzw. |
| | 0,3 (1.1; 1.2) Gew.-% |
| Anmachwasser | 288 g |

### Mischvorschrift und Bestimmungsmethoden:

Die Mörtelmischungen wurden gemäß DIN EN 196-1, Abs. 6.3 zubereitet. Das Fließverhalten wurde mit einem Fließrinnentest gemäß der Vergussmörtelrichtlinie des Deutschen Betonvereins e.V. (Fassung vom September 1990, redaktionell überarbeitet 1996) jeweils nach 5, 30 und 60 Minuten bestimmt.

Zur Ermittlung der Druckfestigkeiten wurden von den jeweiligen Mörteln Prismen mit der Dimension 4 x 4 x 16 cm hergestellt, diese spätestens nach 24 h ausgeschalt und dann bei Normklima (+20 °C und 65 % relative Feuchte) zur weiteren Aushärtung gelagert.

Die ermittelten Fließrinnenwerte sind in Tabelle 4 zusammengefasst, während in der Tabelle 5 die Druckfestigkeiten der jeweiligen Mörtelmischungen zu verschiedenen Zeitpunkten wiedergegeben sind.

**Tabelle 4: Fließrinnenmaße der Mörtelmischungen**

| Dispergiermittel | Dosierung | W/Z-Wert | Fließrinnenmaß [cm] nach | | |
|---|---|---|---|---|---|
| gemäß Beispiel | Massen-% (bez. a. Zement) | | 5 min | 30 min | 60 min |
| 1.1 | 0,30 | 0,32 | Nicht fließfähig | Nicht fließfähig | Nicht fließfähig |
| 1.2 | 0,30 | 0,32 | Nicht fließfähig | Nicht fließfähig | Nicht fließfähig |
| A | 0,20 | 0,32 | 75 | 71 | 65 |
| A1 | 0,20 | 0,32 | 71 | 66 | 60 |
| A2 | 0,20 | 0,32 | 70 | 64 | 60 |
| B | 0,20 | 0,32 | 81 | 75 | 70 |
| B1 | 0,20 | 0,32 | 75 | 70 | 67 |
| B2 | 0,20 | 0,32 | 73 | 68 | 64 |

**Tabelle 5. Frischmörtelrohdichte und Druckfestigkeiten der Mörtelprismen**

| Disper giermittel gemäß Beispiel | Frischmörtelrohdichte [g/cm3] | Druckfestigkeit | | | | |
|---|---|---|---|---|---|---|
| | | [N/mm2] nach 12 h | [N/mm2] nach 16 h | [N/mm2] nach 24 h | [N/mm2] nach 7 d | [N/mm2] nach 28 d |
| A | 2,29 | 3,2 | 10,6 | 29,8 | 65,7 | 79,3 |
| A1 | 2,29 | 3,0 | 10,1 | 29,5 | 65,0 | 80,0 |
| A2 | 2,31 | 2,7 | 8,5 | 28,8 | 64,3 | 79,9 |
| B | 2,30 | 9,5 | 25,1 | 40,2 | 71,0 | 81,4 |
| B1 | 2,29 | 9,0 | 24,4 | 39,5 | 68,8 | 82,3 |
| B2 | 2,31 | 8,3 | 24,5 | 41,0 | 68,5 | 82,0 |

## Patentansprüche

1. Verwendung von wasserlöslichen Polymeren, bestehend aus
a) monoethylenisch ungesättigten, Säuregruppen tragenden Monomeren in saurer, teilweise oder vollständig neutralisierter Form der Reihe Acrylsäure, Methacrylsäure, 2-Ethylacrylsäure, 2-Propylacrylsäure, Vinylessigsäure, Croton- und lsocrotonsäure, Maleinsäure, Fumarsäure, Itaconsäure, Citraconsäure, Vinylsulfonsäure, Methallylsulfonsäure, 2-Acrylamido-2-methylpropylsulfonsäure, 4-Vinylphenylsulfonsäure, Vinylphosphonsäure sowie (Halb-)Ester und/oder Amide der genannten Carbonsäuren und/oder deren Gemische und/oder deren Anhydride
und gegebenenfalls
b) weiteren mit den Monomeren der Gruppe a) copolymerisierbaren neutralen monoethylenisch ungesättigten Monomeren der Reihe (Meth)Acrylnitril, (Meth)Allylalkohol, Vinylether wie z.B. Hydroxy- und Alkoxypolyethylenoxy- bzw. -polypropylenoxyvinylether sowie analoge Allylether mit bis zu 10 sich wiederholenden Einheiten wiez.B. Polyethylenglycolmonoallylether oder gemischte EO-PO-Monoalkylether, N-Vinylacetamid, N-Vinyllactame, N-Vinylpyrrolidon, N-Vinylimidazol, siliciumfunktionelle Comonomere, wie (Meth-)Acryloxyalkyltri-(alkoxy)-Silane, Vinyltrialkoxysilane und Vinylmethyldialk oxysilane mit C₁ bis C₅-Alkyl- bzw. Alkoxy-Resten sowie deren Derivate und deren Mischungen
als Trocknungshilfsmittel für die Herstellung pulverförmiger, polymerer Dispergiermittel, **dadurch gekennzeichnet, dass** das pulverförmige polymere Dispergiermittel eine Restfeuchte von < 5 Gew.-% aufweist.

2. Verwendung nach Anspruch 1, **dadurch gekennzeichnet, dass** die wasserlöslichen Polymeren mindestens 20 Gew.-% an Monomeren a) und höchstens 80 Gew.-% an Monomeren b) enthalten.

3. Verwendung nach einem der Ansprüche 1 oder 2, **dadurch gekennzeichnet, dass** die Säuregruppen der monoethylenisch ungesättigten Monomeren a) vor, während oder nach erfolgter Polymerisation zumindest teilweise neutralisiert wurden, insbesondere mit Hilfe von Alkali- und/oder Erdalkalihydroxiden, Ammoniak, einem Amin, Polyamin oder Aminoalkohol.

4. Verwendung nach einem der Ansprüche 1 bis 3, **dadurch gekennzeichnet, dass** die Monomeren der Gruppe a) ausgewählt sind aus Hydroxyalkyl(meth)acrylat, mit Alkyl = C₁ bis C₅, Hydroxyalkyl-polyethylenoxy- und -propylenoxy- bzw. -butylenoxy(meth)-acrylat mit Alkyl = C₁ bis C₅.

5. Verwendung nach einem der Ansprüche 1 bis 4, **dadurch gekennzeichnet, dass** das wasserlösliche Polymer ein mittleres Molekulargewicht Mₙ von 1000 bis 100.000 g/mol, vorzugsweise zwischen 2000 und 70.000 g/mol und besonders bevorzugt zwischen 3000 und 50.000 g/mol, aufweist.

6. Verwendung nach einem der Ansprüche 1 bis 5, **dadurch gekennzeichnet, dass** das wasserlösliche Polymer durch insbesondere radikalische Polymerisation in Wasser oder einem wasserhaltigen Gemisch mit maximal 30 Gew.-% eines organischen Lösemittels, durch Emulsionspolymerisation oder durch eine lösemittelfreie Substanzpolymerisation erhältlich ist.

7. Verwendung nach einem der Ansprüche 1 bis 6, **dadurch gekennzeichnet, dass** als Trocknungshilfsmittel wässrige Lösungen, enthaltend 1 bis 99 Gew.-% des wasserlöslichen Polymers, besonders bevorzugt 20 bis 70 Gew.-% und ganz besonders bevorzugt zwischen 35 und 60 Gew.-%, eingesetzt werden.

8. Verwendung nach einem der Ansprüche 1 bis 7, **dadurch gekennzeichnet, dass** das Trocknungshilfsmittel dem Herstellungsprozess in Anteilen bis maximal 50 Gew.-% und bevorzugt zwischen 5 und 3O Gew.-%, bezogen auf das Dispergiermittel, zugeführt wird.

9. Verwendung nach einem der Ansprüche 1 bis 8, **dadurch gekennzeichnet, dass** das Trocknungshilfsmittel in einem Sprühtrocknungsprozess eingesetzt wird.

10. Verwendung nach einem der Ansprüche 1 bis 8, **dadurch gekennzeichnet, dass** das Trocknungshilfsmittel in einem Kontakttrockner, Wirbelschichttrockner, Bandtrockner oder in einem Trocknungsprozess eingesetzt wird, der mit Hilfe von Wärmestrahlung wie z.B. Infrarot- oder Mikrowellenstrahlung durchgeführt wird.

11. Verwendung nach einem der Ansprüche 1 bis 10, **dadurch gekennzeichnet, dass** das wasserlösliche Polymer für die Herstellung eines Dispergiermittels eingesetzt wird, das aus Polyoxyalkylen-haltigen Strukturelementen, Carbonsäure- und/oder Carbonsäureanhydrid-Monomeren besteht.

12. Verwendung nach einem der Ansprüche 1 bis 11, **dadurch gekennzeichnet, dass** das pulverförmige polymere Dispergiermittel eine Restfeuchte < 2 Gew.-% aufweist.

13. Verwendung nach einem der Ansprüche 1 bis 12, **dadurch gekennzeichnet, dass** dem mit dem Trocknungshilfsmittel hergestellten polymeren Dispergiermittel qualitätsverbessernde Zusätze aus der Gruppe Kreide, Kieselsäure, Calzit, Dolomit, Quarzmehl, Bentonit, Bimsmehl, Titandioxid, Aluminiumoxid, Flugasche, Zemente, Silikat, Talkum, Glimmer, Anhydrit, Kalk, Kieselgur, Gips, Magnesit, Tonerde, Kaolin, Schiefer- und Gesteinsmehle, Bariumsulfat sowie Gemische daraus zugesetzt werden.

14. Verwendung nach Anspruch 13, **dadurch gekennzeichnet, dass** die qualitätsverbessernden Zusätze in feinteiliger Form, vorzugsweise mit einer Teilchengröße von 0,1 bis 1000 *µ*m, eingesetzt werden.

15. Verwendung nach einem der Ansprüche 1 bis 14, **dadurch gekennzeichnet, dass** die erhaltenen polymeren Dispergiermittel mineralischen Bauwerkstoffen in Anteilen von 0,05 bis 5 Gew.-%, bezogen auf das abbindende Grundsystem, zugesetzt werden.

16. Verwendung nach einem der Ansprüche 1 bis 15, **dadurch gekennzeichnet, dass** die erhaltenen polymeren Dispergiermittel mineralischen Systemen, wie Bitumen-haltige Baustoffe, auf hydraulisch abbindenden Bindemitteln, wie Zement, bzw. auf latent hydraulisch abbindenden Bindemitteln basierende Baustoffe, Gips, Anhydrit oder sonstige Calciumsulfat-basierende Baustoffe, keramische Massen, Feuerfestmassen, Ölfeldbaustoffeund dispersionsbasierende Baustoffe, zugegeben werden.

17. Pulverförmiges, polymeres Dispergiermittel, herstellbar unter Verwendung von wasserlöslichen Polymeren, bestehend aus
a) monoethylenisch ungesättigten, Säuregruppen tragenden Monomeren in saurer, teilweise oder vollständig neutralisierter Form der Reihe Acrylsäure, Methacrylsäure, 2-Ethylacrylsäure, 2-Propylacrylsäure, Vinylessigsäure, Croton- und Isocrotonsäure, Maleinsäure, Fumarsäure, Itaconsäure, Citraconsäure, Vinylsulfonsäure, Methallylsulfonsäure, 2-Acrylamido-2-methylpropylsulfonsäure, 4-Vinylphenylsulfonsäure, Vinylphosphonsäure sowie (Halb-)Ester und/oder Amide der genannten Carbonsäuren und/oder deren Gemische und/oder deren Anhydride
und gegebenenfalls
b) weiteren mit den Monomeren der Gruppe a) copolymerisierbaren neutralen monoethylenisch ungesättigten Monomeren der Reihe (Meth)Acrylnitril, (Meth)Allylalkohol, Vinylether wie z.B. Hydroxy- und Alkoxypolyethylenoxy- bzw. -polypropylenoxyvinylether sowie analoge Allylether mit bis zu 10 sich wiederholenden Einheiten wie z.B. Polyethylglycolmonoallylether oder gemischte EO-PO-Monoalkylether, N-Vinylacetamid, N-Vinyllactame, N-Vinylpyrrolidon, N-Vinylimidazol, siliciumfunktionelle Comonomere, wie (Meth-)Acryloxyalkyltri-(alkoxy)-Silane, Vinyltrialkoxysilane und Vinylmethyldialkoxysilane mit C₁ bis C₅-Alkyl- bzw. Alkoxy-Resten sowie deren Derivate und deren Mischungen
als Trocknungshilfsmittel, **dadurch gekennzeichnet, dass** das pulverförmige polymere Dispergiermittel eine Restfeuchte von < 5 Gew.-% aufweist.

18. Baustoffzusammensetzung enthaltend
- 10 bis 60 Gew.-% eines mineralischen Bindemittels,
- 0,1 bis 20 Gew.% eines pulverförmigen, polymeren Dispergiermittels nach Anspruch 17,
- bis zu 25 Gew.% an üblichen Hilfsmitteln, jeweils bezogen auf die Gesamtzusammensetzung und
- als Restmenge Zuschläge wie Sand, Füllstoffe, Pigmente, natürliche Fasern und/oder synthetische Fasern.

## Claims

1. Use of water-soluble polymers comprising
a) monoethylenically unsaturated monomers carrying acidic groups in an acidic, or partially or completely neutralized form from the series acrylic acid, methacrylic acid, 2-ethylacrylic acid, 2-propylacrylic acid, vinylacetic acid, crotonic and isocrotonic acid, maleic acid, fumaric acid, itaconic acid, citraconic acid, vinylsulfonic acid, methallylsulfonic acid, 2-acrylamido-2-methylpropylsulfonic acid, 4-vinylphenylsulfonic acid, vinylphosphonic acid and (semi)esters and/or amides of the said carboxylic acids and/or mixtures and/or anhydrides thereof
and optionally
b) other neutral monoethylenically unsaturated monomers that can copolymerize with the monomers of group a) from the series (meth)acrylnitrile, (meth)allyl alcohol, vinyl ethers such as hydroxy- and alkoxypolyethyleneoxy or -polypropyleneoxyvinyl ethers and analogous allyl ethers containing up to 10 repeating units such as e.g. polyethylene glycol monoallyl ethers or mixed EO-PO monoalkyl ethers, N-vinyl-acetamide, N-vinyllactams, N-vinylpyrrolidone, N-vinylimidazole, silicon-functional comonomers such as (meth-) acryloxyalkyl-tri-(alkoxy)-silanes, vinyltrialkoxysilanes and vinylmethyldialkoxysilanes with C₁ to C₅ alkyl or alkoxy residues and derivatives and mixtures thereof
as drying aids for producing polymeric dispersants in a powder form, **characterized in that** the polymeric dispersant in a powder form has a residual moisture-content of < 5 % by weight.

2. Use according to claim 1, **characterized in that** the water-soluble polymers contain at least 20 % by weight of monomers a) and a maximum of 80 % by weight of monomers b).

3. Use according to one of the claims 1 or 2, **characterized in that** the acidic groups of the monoethylenically unsaturated monomers a) are at least partially neutralized before, during or after polymerization especially with the aid of alkali and/or alkaline earth hydroxides, ammonia, an amine, polyamine or amino alcohol.

4. Use according to one of the claims 1 to 3, **characterized in that** the monomers of group a) are selected from hydroxyalkyl(meth)acrylate, where alkyl = C₁ to C₅, hydroxyalkylpolyethyleneoxy- and -propyleneoxy- or -butyleneoxy (meth)-acrylate where alkyl = C₁ to C₅.

5. Use according to one of the claims 1 to 4, **characterized in that** the water-soluble polymer has an average molecular weight Mₙ of 1000 to 100,000 g/mol, preferably between 2000 and 70,000 g/mol and particularly preferably between 3000 and 50,000 g/mol.

6. Use according to one of the claims 1 to 5, **characterized in that** the water-soluble polymer is obtainable especially by radical polymerization in water or in an aqueous mixture containing a maximum of 30 % by weight of an organic solvent, by emulsion polymerization or by a solvent-free bulk polymerization.

7. Use according to one of the claims 1 to 6, **characterized in that** aqueous solutions containing 1 to 99 % by weight of the water-soluble polymer, particularly preferably 20 to 70 % by weight and quite particularly preferably between 35 and 60 % by weight are used as the drying aid.

8. Use according to one of the claims 1 to 7, **characterized in that** the drying aid is added to the production process in amounts of no more than 50 % by weight, preferably between 5 and 30 % by weight based on the dispersant.

9. Use according to one of the claims 1 to 8, **characterized in that** the drying aid is used in a spray drying process.

10. Use according to one of the claims 1 to 8, **characterized in that** the drying aid is used in a contact drier, fluidized-bed drier or band drier or in a drying process that is carried out with the aid of heat radiation such as infrared or microwave radiation.

11. Use according to one of the claims 1 to 10, **characterized in that** the water-soluble polymer is used to produce a dispersant which is composed of structural elements containing polyoxyalkylene, carboxylic acid and/or carboxylic acid anhydride monomers.

12. Use according to one of the claims 1 to 11, **characterized in that** a polymeric dispersant is obtained in a powder form which has a residual moisture content of < 2 % by weight.

13. Use according to one of the claims 1 to 12, **characterized in that** quality-improving additives from the group comprising chalk, silicic acid, calcite, dolomite, quartz powder, bentonite, pumice powder, titanium dioxide, aluminium oxide, flue ash, cements, silicate, talcum, mica, anhydrite, lime, kieselguhr, gypsum, magnesite, clay, kaolin, powdered slate and powdered mineral stone, barium sulfate and mixtures thereof are added to the polymeric dispersant produced with the drying aid.

14. Use according to claim 13, **characterized in that** the quality-improving additives are used in a finely dispersed form, preferably having a particle size of 0.1 to 1000 µm.

15. Use according to one of the claims 1 to 14, **characterized in that** the resulting polymeric dispersants are added to mineral building materials in amounts of 0.05 to 5 % by weight based on the basic setting system.

16. Use according to one of the claims 1 to 15, **characterized in that** the resulting polymeric dispersants are added to mineral systems such as bitumen-containing building materials, building materials based on hydraulically setting binders such as cement or based on latent hydraulically setting binders, gypsum, anhydrite or other calcium sulfate-based building materials, ceramic pastes, fire-resistant pastes, oil field building materials and dispersion-based building materials.

17. Polymeric dispersant in a powder form that can be produced using water-soluble polymers comprising
a) monoethylenically unsaturated monomers carrying acidic groups in an acidic, or partially or completely neutralized form from the series acrylic acid, methacrylic acid, 2-ethylacrylic acid, 2-propylacrylic acid, vinylacetic acid, crotonic and isocrotonic acid, maleic acid, fumaric acid, itaconic acid, citraconic acid, vinylsulfonic acid, methallylsulfonic acid, 2-acrylamido-2-methylpropylsulfonic acid, 4-vinylphenylsulfonic acid, vinylphosphonic acid and (semi)esters and/or amides of the said carboxylic acids and/or mixtures and/or anhydrides thereof
and optionally
b) other neutral monoethylenically unsaturated monomers that can copolymerize with the monomers of group a) from the series (meth)acrylnitrile, (meth)allyl alcohol, vinyl ethers such as hydroxy- and alkoxypolyethyleneoxy or -polypropyleneoxyvinyl ethers and analogous allyl ethers containing up to 10 repeating units such as e.g. polyethylene glycol monoallyl ethers or mixed EO-PO monoalkyl ethers, N-vinyl-acetamide, N-vinyllactams, N-vinylpyrrolidone, N-vinylimidazole, silicon-functional comonomers such as (meth-) acryloxyalkyl-tri-(alkoxy)-silanes, vinyltrialkoxysilanes and vinylmethyldialkoxysilanes with C₁ to C₅ alkyl or alkoxy residues and derivatives and mixtures thereof
as drying aids, **characterized in that** the polymeric dispersant in a powder form has a residual moisture-content of < 5 % by weight.

18. Building material composition containing
- 10 to 60 % by weight of a mineral binder,
- 0.1 to 20 % by weight of a polymeric dispersant in a powder form according to claim 17,
- up to 25 % by weight of common auxiliary agents, in each case based on the total composition
and
- the remaining amount as additives such as sand, fillers, pigments, natural fibres and/or synthetic fibres.

## Revendications

1. Utilisation de polymères solubles dans l'eau, constitués
a) de monomères à insaturation monoéthylénique, portant des groupes acides, sous forme partiellement ou entièrement neutralisée, de la série de l'acide acrylique, l'acide méthacrylique, l'acide 2-éthylacrylique, l'acide 2-propylacrylique, l'acide vinylacétique, l'acide crotonique et isocrotonique, l'acide maléique, l'acide fumarique, l'acide itaconique, l'acide citraconique, l'acide vinylsulfonique, l'acide méthallylsulfonique, l'acide 2-acrylamido-2-méthylpropylsulfonique, l'acide 4-vinylphénylsulfonique, l'acide vinylphosphonique et des (hémi)esters et/ou des amides des acides carboxyliques cités et/ou leurs mélanges et/ou leurs anhydrides,
et éventuellement
b) d'autres monomères à insaturation monoéthylénique neutres copolymérisables avec les monomères du groupe a), de la série du (méth)acrylonitrile, de l'alcool (méth)allylique, des éthers vinyliques comme, par exemple, les éthers hydroxy- et alcoxypolyéthylénoxy- ou -polypropylénoxyvinyliques et les éthers allyliques analogues ayant jusqu'à 10 unités répétitives comme, par exemple, les éthers monoallyliques de polyéthylèneglycol ou les éthers mixtes EO-PO-monoalkyliques, le N-vinylacétamide, les N-vinyllactames, la N-vinylpyrrolidone, le N-vinylimidazole, les comonomères fonctionnels à base de silicium tels que les (méth)acryloxyalkyl-trialcoxysilanes, les vinyltrialcoxysilanes et les vinylméthyldialcoxysilanes ayant des restes alkyle ou alcoxy en C₁-C₆ et leurs dérivés et leurs mélanges
comme adjuvants de séchage pour la préparation de compositions polymères pulvérulentes dispersibles, **caractérisée en ce que** la composition polymère pulvérulente dispersible présente une humidité résiduelle inférieure à 5 % en masse.

2. Utilisation selon la revendication 1, **caractérisée en ce que** les polymères solubles dans l'eau contiennent au moins 20 % en masse de monomères a) et au plus 80 % en masse de monomères b).

3. Utilisation selon l'une des revendications 1 ou 2, **caractérisée en ce que** les groupes acides des monomères à insaturation monoéthylénique a) ont été au moins partiellement neutralisés avant, pendant ou après la polymérisation, en particulier à l'aide d'hydroxydes de métaux alcalins et/ou alcalino-terreux, d'ammoniac, d'une amine, d'une polyamine ou d'un aminoalcool.

4. Utilisation selon l'une des revendications 1 à 3, **caractérisée en ce que** les monomères du groupe a) sont choisis parmi les (méth)acrylates d'hydroxyalkyle avec alkyle = C₁ à C₅, les (méth)acrylates d'hydroxyalkyle polyéthoxylés, polypropoxylés ou polybutoxylésavec alkyle = C₁ à C₅.

5. Utilisation selon l'une des revendications 1 à 4, **caractérisée en ce que** le polymère soluble dans l'eau a une masse molaire moyenne Mₙ de 1000 à 100 000 g/mol, de préférence comprise entre 2000 et 70 000 g/mol, et de façon particulièrement préférée comprise entre 3000 et 50 000 g/mol.

6. Utilisation selon l'une des revendications 1 à 5, **caractérisée en ce que** le polymère soluble dans l'eau peut être obtenu en particulier par polymérisation radicalaire dans l'eau ou un mélange aqueux contenant au plus 30 % en masse d'un solvant organique, par polymérisation en émulsion ou par polymérisation en masse sans solvant.

7. Utilisation selon l'une des revendications 1 à 6, **caractérisée en ce que** l'on utilise comme adjuvant de séchage, des solutions aqueuses contenant 1 à 99 % en masse du polymère soluble dans l'eau, de façon particulièrement préférée 20 à 70 % en masse et de façon tout particulièrement préférée entre 35 et 60 % en masse.

8. Utilisation selon l'une des revendications 1 à 7, **caractérisée en ce que** l'on ajoute l'adjuvant de séchage dans le procédé de préparation en des proportions allant au plus jusqu'à 50 % en masse et de préférence comprises entre 5 et 30 % en masse par rapport à la composition dispersible.

9. Utilisation selon l'une des revendications 1 à 8, **caractérisée en ce que** l'adjuvant de séchage est utilisé dans un procédé de séchage par pulvérisation.

10. Utilisation selon l'une des revendications 1 à 8, **caractérisée en ce que** l'adjuvant de séchage est utilisé dans un sécheur par contact, un sécheur à lit fluidisé, un sécheur à bande transporteuse ou dans un procédé de séchage qui est effectué à l'aide d'un rayonnement thermique comme, par exemple, un rayonnement infrarouge ou de micro-ondes.

11. Utilisation selon l'une des revendications 1 à 10, **caractérisée en ce que** l'on utilise le polymère soluble dans l'eau pour la préparation d'une composition dispersible qui est constituée d'éléments structuraux polyalcoxylés, de monomères de type acide carboxylique et/ou anhydride d'acides carboxyliques.

12. Utilisation selon l'une des revendications 1 à 11, **caractérisée en ce que** la composition polymère pulvérulente dispersible présente une humidité résiduelle inférieure à 2 % en masse.

13. Utilisation selon l'une des revendications 1 à 12, **caractérisée en ce que** l'on ajoute à la composition polymère dispersible préparé avec l'adjuvant de séchage des additifs améliorant la qualité, choisis dans le groupe formé par la craie, l'acide silicique, la calcite, la dolomite, la poudre de quartz, la bentonite, la poudre de ponce, le dioxyde de titane, l'oxyde d'aluminium, la suie, le ciment, les silicates, le talc, le mica, l'anhydrite, la chaux, la terre d'infusoires, le gypse, la magnésite, l'alumine, le kaolin, la poudre de schiste ou de roche, le sulfate de baryum et leurs mélanges.

14. Utilisation selon la revendication 13, **caractérisée en ce que** l'on utilise des additifs améliorant la qualité sous une forme finement divisée, de préférence avec une taille de particules de 0,1 à 1 000 µm.

15. Utilisation selon l'une des revendications 1 à 14, **caractérisée en ce que** les compositions polymères dispersibles obtenues sont ajoutées à des matériaux de construction minéraux en des quantités de 0,05 à 5 % en masse par rapport au système de base assurant la prise.

16. Utilisation selon l'une des revendications 1 à 15, **caractérisée en ce que** les compositions polymères dispersibles obtenues sont ajoutées à des systèmes minéraux comme des matériaux de construction contenant du bitume, des liants à prise hydraulique comme un ciment, ou des matériaux de construction à base de liants à prise hydraulique latents, du gypse, de l'anhydrite ou d'autres matériaux de construction à base de sulfate de calcium, des compositions céramiques, des compositions réfractaires, des matériaux de construction pour des gisements de pétrole et des matériaux de construction à base de dispersions.

17. Composition polymère pulvérulente dispersible, pouvant être préparée à partir de polymères solubles dans l'eau, constitués
a) de monomères à insaturation monoéthylénique, portant des groupes acides, sous forme partiellement ou entièrement neutralisée, de la série de l'acide acrylique, l'acide méthacrylique, l'acide 2-éthylacrylique, l'acide 2-propylacrylique, l'acide vinylacétique, l'acide crotonique et isocrotonique, l'acide maléique, l'acide fumarique, l'acide itaconique, l'acide citraconique, l'acide vinylsulfonique, l'acide méthallylsulfonique, l'acide 2-acrylamido-2-méthylpropylsulfonique, l'acide 4-vinylphénylsulfonique, l'acide vinylphosphonique et des (hémi)esters et/ou des amides des acides carboxyliques cités et/ou leurs mélanges et/ou leurs anhydrides,
et éventuellement
b) d'autres monomères à insaturation monoéthylénique neutres copolymérisables avec les monomères du groupe a), de la série du (méth)acrylonitrile, de l'alcool (méth)allylique, des éthers vinyliques comme, par exemple, les éthers hydroxy- et alcoxypolyéthylénoxy- ou -polypropylénoxyvinyliques et les éthers allyliques analogues ayant jusqu'à 10 unités répétitives comme, par exemple, les éthers monoallyliques de polyéthylèneglycol ou les éthers mixtes EO-PO-monoalkyliques, le N-vinylacétamide, les N-vinyllactames, la N-vinylpyrrolidone, le N-vinylimidazole, les comonomères fonctionnels à base de silicium tels que les (méth)acryloxyalkyl-trialcoxysilanes, les vinyltrial-coxysilanes et les vinylméthyldialcoxysilanes ayant des restes alkyle ou alcoxy en C₁-C₆ et leurs dérivés et leurs mélanges
comme adjuvant de séchage, **caractérisée en ce que** la composition polymère pulvérulente dispersible présente une humidité résiduelle inférieure à 5 % en masse.

18. Composition de matériaux de construction, contenant
- 10 à 60 % en masse d'un liant minéral,
- 0,1 à 20 % en masse d'une composition dispersible polymère pulvérulente selon la revendication 17,
- jusqu'à 25 % en masse d'agents auxiliaires classiques, rapporté à la composition totale, et
- pour le reste, des additifs comme du sable, des charges, des pigments, des fibres naturelles et/ou des fibres synthétiques.
